# EUROPEAN PATENT APPLICATION

(11) **EP 4 782 311 A1**
(43) Date of publication of application: **29.07.2026**
(21) Application number: 26150423.7
(22) Date of filing: 06.01.2026
(51) Int. Cl.: B62D 21/02, B62D 21/03, B62D 21/06, B62D 21/07, B62D 21/15

(54) **VEHICLE FRAME STRUCTURE**

(30) Priority: 20.01.2025 JP 2025007861
(71) Applicant: Toyota Jidosha Kabushiki Kaisha, Toyota-shi, Aichi-ken 471-8571 (JP)
(72) Inventor: USUKI, Ryo, TOYOTA-SHI, AICHI-KEN, 471-8571 (JP); KOMATSUZAKI, Takaya, TOYOTA-SHI, AICHI-KEN, 471-8571 (JP); KOMATSU, Yoshiki, TOYOTA-SHI, AICHI-KEN, 471-8571 (JP); KENJO, Yuta, TOYOTA-SHI, AICHI-KEN, 471-8571 (JP)
(74) Representative: Cabinet Beau de Loménie

(57) **Abstract**

A vehicle frame structure includes a pair of side rails (10) extending along a vehicle longitudinal direction, a first cross member (14) extending along a vehicle width direction and configured to couple between the pair of side rails (10), a second cross member (16) placed rearward of the first cross member (14) in the vehicle, extending along the vehicle width direction, and configured to couple between the pair of side rails (10), a pair of brace members (30) configured to connect the first cross member (14) to the side rails (10) or to the second cross member (16) and placed in such a manner that a separation distance between the brace members (30) is increased toward a vehicle rear region, and a coupling member (32) extending along the vehicle width direction and configured to couple between the pair of brace members (30).

## Description

### CROSS REFERENCE TO RELATED APPLICATION

This application claims priority to Japanese Patent Application No. 2025-007861 filed on January 20, 2025, which is incorporated herein by reference in its entirety including the specification, claims, drawings, and abstract, and to which the person of the art can refer when considering the present disclosure.

### TECHNICAL FIELD

The present specification discloses a vehicle frame structure.

### BACKGROUND

Conventionally, various forms of vehicle frame structures have been known. For example, Patent Document 1 discloses a frame structure including a pair of side rails extending along a vehicle longitudinal direction and a plurality of cross members for connecting between the pair of side rails. In a configuration of Patent Document 1, a fuel cell stack is mounted on two cross members.

### CITATION LIST

### PATENT LITERATURE

Patent Document 1: JP 2019-147500 A

Here, in the structure of Patent Document 1, the two side rails and the two cross members form a substantially rectangular mounting area at which a high-voltage component, such as the fuel cell stack is mounted. Patent Document 1 does not suggest any component configured to suppress deformation of the side rails or the cross members. For this reason, in the structure of Patent Document 1, when a rotational moment is exerted on the side rail due to an offset collision, there has been a danger that the substantially rectangular mounting area may be deformed into a substantially parallelogrammatic shape, i.e., so-called matchbox deformation of the substantially rectangular mounting area may occur. If such matchbox deformation of mounting space occurs, the side rails are greatly deformed, which may cause the side rails to interfere with another member, such as, for example, the high-voltage component.

With this in view, the present specification discloses a vehicle frame structure which can prevent interference of a side rail with another member in a highly efficient manner.

### SUMMARY

A vehicle frame structure disclosed herein includes a pair of side rails extending along a vehicle longitudinal direction, a first cross member extending along a vehicle width direction and configured to couple between the pair of side rails, a second cross member placed rearward of the first cross member in the vehicle longitudinal direction, the second cross member extending along the vehicle width direction and configured to couple between the pair of side rails, a pair of brace members configured to connect the first cross member to the side rails or to the second cross member and placed in such a manner that a separation distance from each other is increased toward a vehicle rear region, and a coupling member extending along the vehicle width direction and configured to couple between the pair of brace members.

When the brace members are installed, a greater portion of a load can be transmitted from a site of an offset collision to one of the side rails located opposite the site of the offset collision. In this way, a rotational moment that acts inwardly in the vehicle width direction on the side rail can be reduced, which can, in turn, effectively suppress displacement of the first cross member effectively. Further, because the coupling member is installed, displacements of the brace members and thus the displacement of the first cross member can be suppressed further effectively. When the displacement of the first cross member is suppressed, a displacement of the side rails is accordingly suppressed, which can effectively prevent the side rail from interfering with another member.

In this case, an electrical component may be mounted on upper surfaces of the pair of brace members and an upper surface of the coupling member.

Installation of both the brace members and the coupling member leads to effective suppression of deformation of a mounting area defined by the pair of side rails, the first cross member, and the second cross member. As a result, interference of the side rails with the electrical component is prevented, even when an electrical component is installed on the mounting area. That is, such placement can appropriately protect the electrical component even when an offset collision occurs.

In addition, the vehicle frame structure may further include one or more brackets for mounting the electrical component, and at least one of the one or more brackets may be welded to one of the pair of brace members and to the coupling member.

In the thus-configured vehicle frame structure, a relative positional relationship between the coupling member and the brace members can be secured simply and reliably. This can further reliably prevent displacements of the brace members and the first cross member and thus interference of the side rail with another component at the time of occurrence of an offset collision.

In addition, the first cross member may be bolt-fastened to the side rails, and each of the pair of brace members may be bolt-fastened to a corresponding one of the side rails.

When configured as described above, the first cross member and the brace members can be easily removed from the vehicle. As a result, a component, such as, for example, the electrical component, attached to the first cross member or the brace member can be easily removed from the vehicle, which can improve maintainability of the component.

In the above-described configuration, each of the left and right ends of the first cross member may include at least two fastening points, and the at least two fastening points may be spaced from each other in a longitudinal direction of the first cross member.

When configured as described above, the first cross member can be effectively prevented from rotating about the fastening point. This can further reliably prevent the first cross member from getting displaced and can thus prevent the side rails from interfering with another component in the event of an offset collision.

In addition, a storage unit for storing energy may be mounted at a position rearward of the second cross member, and each of the rear ends of the pair of brace members may be fastened, at a position outward of the storage unit in the vehicle width direction, to a corresponding one of the side rails or to the second cross member.

When configured as described above, a load input to the brace member is hampered from transmitting to the storage unit. In this way, the storage unit is appropriately protected.

In this case, the vehicle frame structure may further include a plurality of sub members extending from the second cross member toward the vehicle rear region, in which the storage unit may be mounted on the plurality of sub members, the second cross member may be bolt-fixed to the side rails, and each of the pair of brace members may be bolt-fixed to a corresponding one of the side rails.

When configured as described above, the second cross member, the sub members, and the storage unit can be removed from the vehicle while maintaining the brace members and the first cross member attached to the vehicle. In this way maintainability of the storage unit is improved.

Moreover, the first cross member may include a pair of bends which are bent to protrude toward the vehicle rear region, and each of the front ends of the pair of brace members may be welded to a corresponding one of the pair of bends.

Welding the brace members to the bends can effectively prevent a break at the bends of the first cross member when an offset collision occurs. This can ensure that the load is reliably transmitted from the first cross member to the brace members. As a result, displacement of the first cross member and thus deformation of the side rail can be suppressed further reliably.

In addition, each of the pair of side rails may include a front rail portion, a center rail portion, and a forward kick portion extending along an oblique direction and configured to couple between the front rail portion and the center rail portion, in which a separation distance between the center rail portions is greater than a separation distance between the front rail portions, the first cross member may be joined to a region close to a border between the front rail portion and the forward kick portion, and the second cross member may be joined to a region close to a border between the forward kick portion and the center rail portion.

Both the region close to the border between the front rail portion and the forward kick portion and the region close to the border between the forward kick portion and the center rail portion are sites where the side rail is prone to breakage and is apt to experience stress concentration. When the first cross member and the second cross member are connected to the sites, strength of the side rail can be enhanced.

The technique disclosed herein can ensure that interference of the side rail with another component is reliably prevented.

### BRIEF DESCRIPTION OF DRAWINGS

Embodiments of the present disclosure will be described based on the following figures, wherein:
FIG. 1 shows a vehicle frame structure viewed from below;
FIG. 2 shows a partial enlarged view of the vehicle frame structure in FIG. 1;
FIG. 3 shows the vehicle frame structure at the time of occurrence of an offset collision;
FIG. 4 shows a vehicle frame structure in a comparative example that is viewed from below;
FIG. 5 is a diagram for explaining a principle of how a side rail is displaced;
FIG. 6 shows a vehicle frame structure in another comparative example that is viewed from below; and
FIG. 7 shows a vehicle frame structure in a further comparative example that is viewed from below.

### DESCRIPTION OF EMBODIMENTS

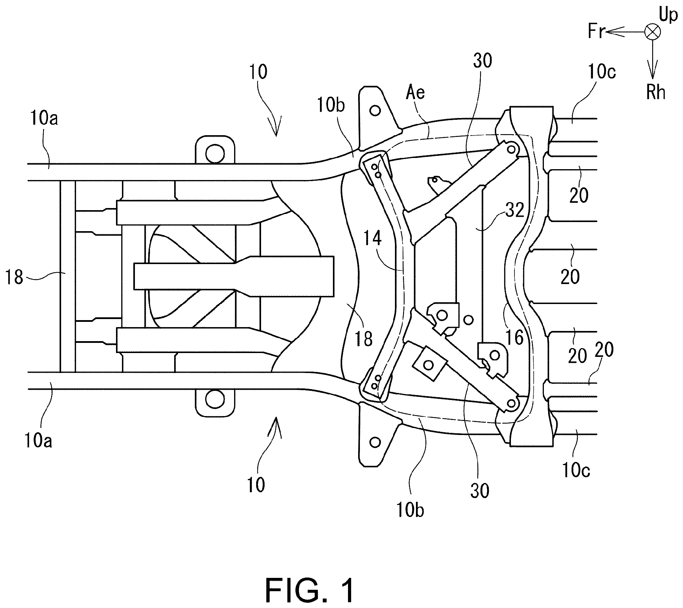

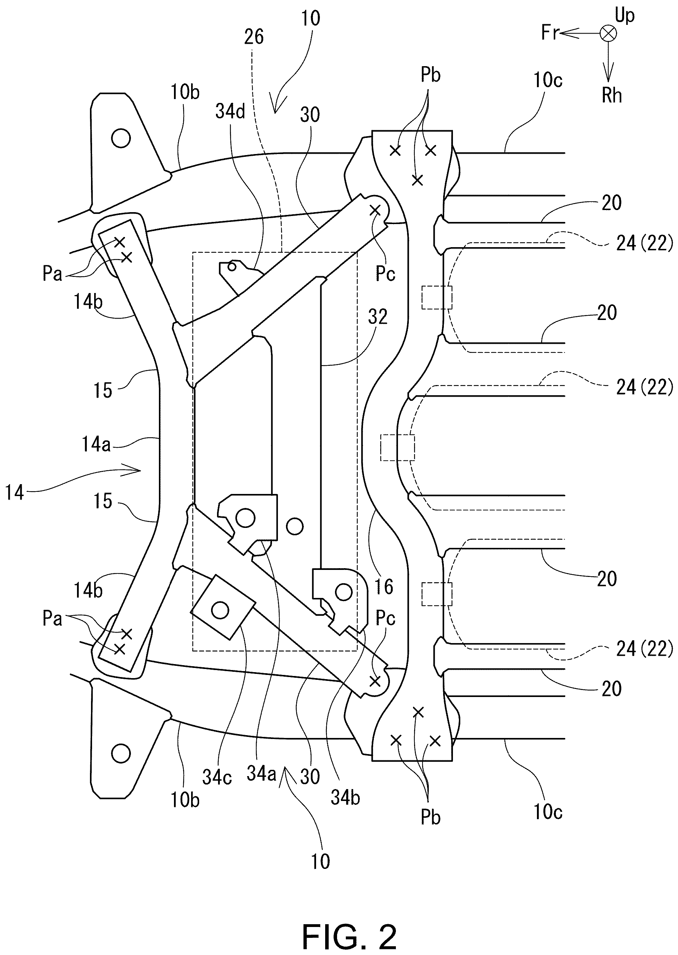

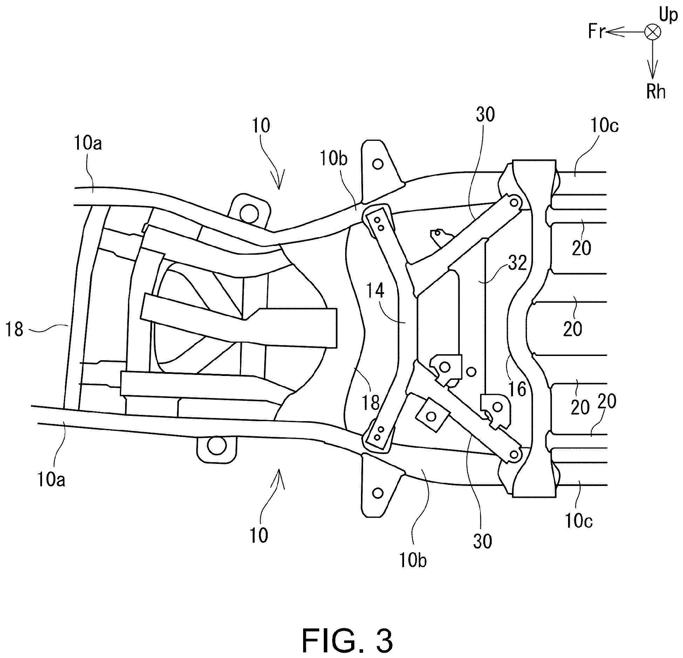

Hereinafter, a vehicle frame structure will be explained with reference to the drawings. FIG. 1 shows a frame of a vehicle viewed from below, and FIG. 2 is a partial enlarged view of the frame shown in FIG. 1. Further, FIG. 3 shows an example of a frame structure at the time of occurrence of an offset collision. In the drawings, reference labels Fr, Up, and Rh respectively denote a front side, an upper side, and a right side of a vehicle.

In the following explanation, the vehicle is equipped with a fuel cell and configured as a fuel cell electric vehicle which travels with electric power generated by the fuel cell. However, the technique disclosed herein is not limited in application to such fuel cell electric vehicles, and may be applied to other types of vehicles, such as battery electric vehicles, hybrid electric vehicles, or internal combustion engine vehicles.

The vehicle frame structure includes a pair of side rails 10. The side rails 10 are frame members extending along the vehicle longitudinal direction. Each of the side rails 10 may be formed, for example, by joining a plurality of metal sheets or by extrusion molding. The two side rails 10 are spaced from each other in the vehicle width direction and have laterally symmetrical shapes. A separation distance between the side rails 10 in the vehicle width direction varies depending on locations in the vehicle longitudinal direction. Specifically, the separation distance between the side rails 10 in a longitudinal center region of the vehicle is greater than the separation distance between the side rails 10 in a front region of the vehicle. Hereinafter, a front portion of the side rail 10 is referred to as a "front rail portion 10a", a longitudinal center portion of the side rail 10 is referred to a "center rail portion 10c". Further, a forward kick portion 10b extending along an oblique direction is inserted between the front rail portion 10a and the center rail portion 10c so as to increase the separation distance toward a vehicle rear region.

A plurality of cross members 14, 16, and 18 are arranged between the two side rails 10. Each of the cross members 14, 16, and 18 is a frame member extending along the vehicle width direction and configured to couple between the pair of side rails 10. Similarly with the side rails 10, the cross members 14, 16, and 18 may be formed by joining a plurality of metal sheets or by extrusion molding.

In the following explanation, among the cross members 14, 16, and 18, the cross member that is located in the vicinity of a border between the front rail portion 10a and the forward kick portion 10b is referred to as a "first cross member 14". Further, the cross member that is located rearward of the first cross member 14 in the vehicle longitudinal direction is referred to as a "second cross member 16", and the remaining cross member is referred to as a "third cross member 18".

The first cross member 14 has, as shown in FIG. 2, two bends 15 which are bent so as to protrude toward the vehicle rear region. Then, the first cross member 14 is roughly divided by the two bends 15 into three portions consisting of a central portion 14a that extends along the vehicle width direction, and a pair of inclined portions 14b that respectively extend from the left and right ends of the central part 14a to an obliquely forward direction. Both ends of the first cross member 14 in the vehicle width direction are respectively bolt-fastened to the side rails 10 directly or indirectly via a bracket or the like. Cross marks shown in FIG. 2 represent bolt-fastening locations. As is evident from FIG. 2, the first cross member 14 has two bolt-fastening points Pa on each of the left and right ends, and has, in toral, four bolt fastening points Pa.

The second cross member 16 is located in the vicinity of a border between the forward kick portion 10b and the front rail portion 10a. In the second cross member 16, its central portion in the vehicle width direction is curved, as shown in FIG. 2, to protrude toward the vehicle front region. Both left and right ends of the second cross member 16 are respectively bolt-fastened to the side rails 10 directly or indirectly via a bracket or the like. In this example, the second cross member 16 has three bolt fastening points Pb on each of the left and right ends, and has, in total, six bolt fastening points Pa.

Further, sub members 20 are welded to the second cross member 16. The sub members 20 are frame members extending from the second cross member 16 toward the vehicle rear region. In this example, four sub members 20 are spaced in parallel from each other in the vehicle width direction. A storage unit 22 is mounted on upper surfaces of the four sub members 20 and an upper surface of the second cross member 16. The storage unit 22 is a device for storing energy sources. In a case of fuel cell electric vehicles, for example, the storage unit 22 includes at least one of a hydrogen tank 24 for storing hydrogen or a battery for storing electric power generated using hydrogen. Components or configurations of the storage unit 22 may be changed as appropriate according to vehicle type. For example, the storage unit 22 may include a fuel tank for storing a petroleum fuel in place of or in addition to the hydrogen tank 24 or the battery. In this example, the storage unit 22 includes three hydrogen tanks 24. The three hydrogen tanks 24 are fixed, for example, to the second cross member 16 and the sub members 20 via brackets which are not illustrated. It should be noted that the hydrogen tanks 24 shown in FIG. 2 are configured to store hydrogen in a gaseous form and have a substantially sandbag shape. However, the hydrogen tanks 24 may have other shapes and may store hydrogen in a liquid form.

An area defined by the first cross member 14, the second cross member 16, and the two side rails 10 functions as a mounting area Ae (see FIG. 1) where an electrical component 26 is mounted. A pair of brace members 30 and a coupling member 32 are also arranged in the mounting area Ae. Each of the brace members 30 is a frame member which connects the first cross member 14 to a corresponding one of the side rails 10. The front ends of the brace members 30 are respectively welded to the bends 15 of the cross member 14. Further, the rear ends of the brace members 30 are respectively bolt-fastened to the side rails 10 directly or indirectly via a bracket or the like. Still further, the two brace members 30 are placed in such a manner that the brace members 30 are inclined relative to the vehicle longitudinal direction to increase the separation distance from each other while approaching the vehicle rear region.

The coupling member 32 is a frame member extending along the vehicle width direction to connect between the two brace members 30. The left and right ends of the coupling member 32 are respectively welded to the two brace members 30. Arrangement of the brace members 30 and the coupling member 32 constitutes a structure similar to a truss in the mounting area Ae. In this way, deformation of the side rails 10 can be effectively suppressed, as will be described further below.

The electrical component 26 is mounted on upper surfaces of the brace members 30 and an upper surface of the coupling member 32. The electrical component 26 is not limited to any specific type of an electrical component. The electrical component 26 may be a high-voltage component, and the electrical component 26 may include, for example, an inverter, a fuel cell stack, a high-voltage battery, or a rotary electric machine. For installation of the electric component 26, a plurality of brackets 34a to 34d are welded to the brace members 30 and the coupling member 32. As can be seen from FIG. 2, some of the brackets 34a-34d, such as brackets 34a and 34b, are arranged to bridge between the brace member 30 and the coupling member 32 and welded to both the brace member 30 and the coupling member 32.

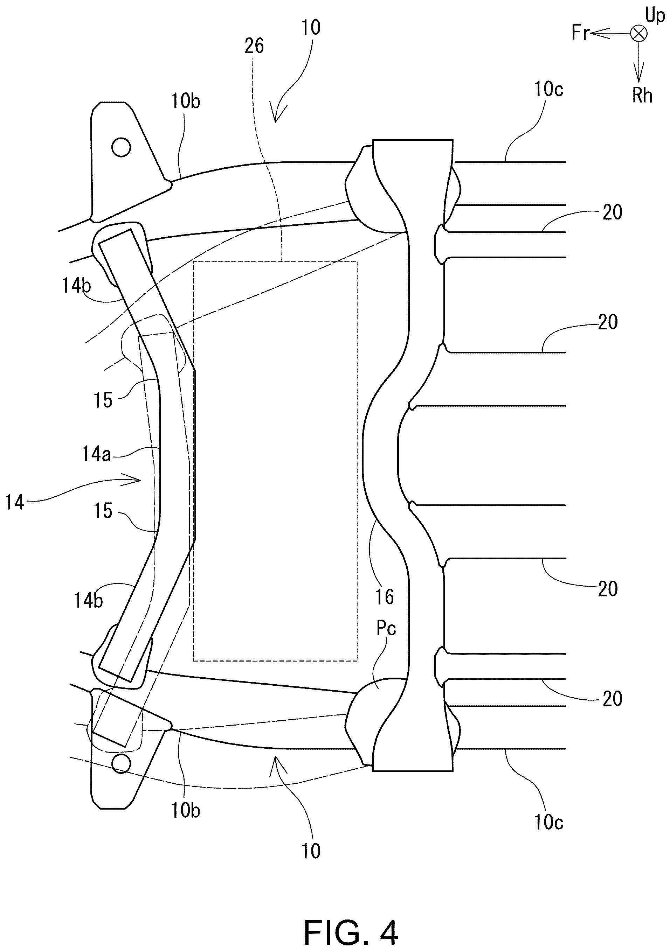

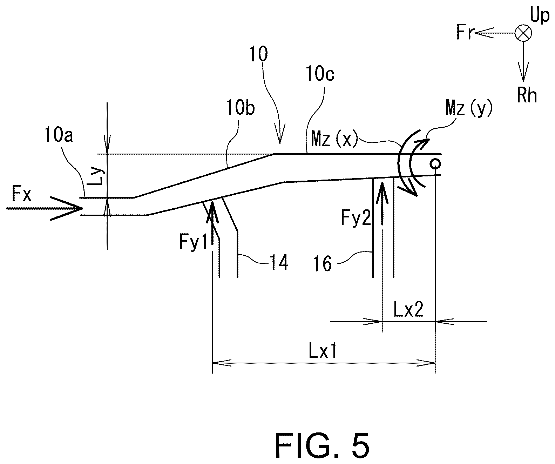

As can be understood from the above explanation, in this example, the brace members 30 and the coupling member 32 are arranged in the mounting area Ae for mounting the electrical component 36. The reason for employing this arrangement will be explained below. FIG. 4 shows a frame structure according to a comparative example. The frame structure of the comparative example includes the side rails 10, the first cross member 14, and the second cross member 16, but includes neither the brace members 30 nor the coupling member 32. In such case, in the event of an offset collision to the vehicle, the collision load cannot be suitably dispersed, which may cause the side rails 10 to be significantly displaced as indicated by the broken, long dash and double short dash lines, in FIG. 4. How such displacements of the side rails 10 are caused will be explained with reference to FIG. 5.

FIG. 5 is a schematic diagram showing a state of the side rail 10 on the left side when an offset collision is caused by an obstacle which collides against a left front region of the vehicle. In this case, the front rail portion 10a of the side rail 10 receives a collision load Fx acting in a direction toward the vehicle rear region. Here, because the forward kick portion 10b is designed to flatten outwardly in the vehicle width direction, the center rail portion 10c is outwardly offset from the front rail portion 10a in the vehicle width direction. In this case, a rotational moment Mz(x) acts on the side rail 10 in a region located rearward of the forward kick portion 10b, the rotational moment Mz(x) causing the side rail 10 to rotate inwardly in the vehicle width direction. The rotational moment Mz(x) is not exactly, but substantially proportional to both the collision load Fx and an offset quantity Ly. Further, a secondary rotational moment Mz(y) opposing the rotational moment Mz(x) also acts on the side rail 10. The secondary rotational moment Mz(y) is generated by reaction forces Fy1 and Fy2 from the first cross member 14 and the second cross member 16. Here, a longitudinal distance from a site of generation of the secondary rotational moment Mz(y) to the first cross member 14 is defined as a first offset Lx1 and a longitudinal distance from the site to the second cross member 16 as a second offset Lx2. In this case, a rotational moment M1 derived from the first reaction force Fy1 is not exactly, but substantially proportional to both the first offset Lx1 and the first reaction force Fy1. In other words, the rotational moment M1 ∝ Lx1 × Fy1. Further, the rotational moment M2 derived from the second reaction force Fy2 is described as M2 ∝ Lx2 × Fy2. Then, the secondary rotational moment Mz(y) has a magnitude equal to the sum of the two rotational moments M1 and M2.

Here, in the comparative example having neither the brace member 30 nor the coupling member 32, the first cross member 14 and the second cross member 16 receive the rotational moment Mz(x), and are easily displaced in the vehicle width direction, which causes so-called matchbox deformation of the entire mounting area Ae. In this case, the first reaction force Fy1 and the second reaction force Fy2 are unable to generate sufficient reaction forces Fx1 and Fx2, and the second rotational moment Mz(y) becomes smaller accordingly. As a result, because the rotational moment Mz(x) is not cancelled by the secondary rotational moment Mz(y), the side rail 10 tends to be broken in the region rearward of the second cross member 16. This causes the forward kick portion 10b to rotate significantly inward in the vehicle width direction and deeply intrude into the original mounting area Ae. Consequently, in the case of the structure according to the comparative example shown in FIG. 4, there has been a danger that the side rail 10 could interfere with the electrical component 26.

In the present example, however, the brace members 30 and the coupling member 32 are installed in the mounting area Ae as described above in order to retard interference between the side rail 10 and the electrical component 26. When the coupling member 32 is installed, as shown in FIG. 3, rotations of the brace member 30 about the fastening point Pb in the event of an offset collision can be effectively suppressed. Further, in this example, brackets 34a and 34b welded to both the brace member 30 and the coupling member 32 are installed. Accordingly, an angular relationship between the brace member 30 and the coupling member 32 is restrained by the brackets 34a and 34b, which can further ensure that rotation of the brace member 30 is reliably suppressed.

Then, suppression of rotation of the brace member 30 can lead to effective suppression of displacement, in the vehicle width direction, of the first cross member 14 welded to the brace member 30. In this way, as shown in FIG. 3, the side rails 10 are prevented from entering the mounting area Ae and accordingly prevented from interfering with the electrical component 26 effectively.

In this example, the two fastening points Pa are provided on each of the left and right ends of the first cross member 14 to prevent rotation of the first cross member 14 relative to the side rail 10. The two fastening points Pa are arranged in line and spaced from each other in a longitudinal direction of the first cross member 14. When the two fastening points Pa are arranged as described above, rotation of the first cross member 14 about the fastening points Pa is effectively prevented.

Welding of the rear end of the brace member 30 to the side rail 10 may be considered in an attempt to prevent rotation of the brace member 30 relative to the side rail 10. Similarly, both ends of the first cross member 14 may be welded to the side rails 10 to attempt to prevent rotation of the first cross member 14 relative to the side rail 10. However, such welding impairs maintainability of the electrical component 26.

Specifically, the electrical component 26 is, as described above, mounted via the brackets 34 on the upper surfaces of the brace members 30 and the upper surface of the coupling member 32. During maintenance of the electrical component 26, the electrical component 26 must be detached from the vehicle. Because the task of detaching the electrical component 26 must be performed from beneath the vehicle, all of the brace members 30 and the coupling member 32 that are present underneath the electrical component 26 must be removed in order to detach the electrical component 26. In order to remove the brace members 30 from the vehicle, the first cross member 14 welded to the brace members 30 must be removed.

As such, for maintenance of the electrical component 26, all of the brace members 30 and the first cross member 14 must be removed from the vehicle. In this example, the brace members 30 and the first cross member 14 are all fastened to the side rails 10 by bolts to facilitate removal of the brace members 30 and the first cross member 14. Then, during maintenance of the electrical component 26, the fastening bolts are removed from the brace members 30 and the first cross member 14 while the electrical component 26 remains attached to the upper surfaces of the brace members 30 and the coupling member 32. Following this, the electrical component 26, the brace members 30, the coupling member 32, and the first cross member 14 are removed from the vehicle without disassembling them from each other. However, when the first cross member 14 and the brace members 30 are bolt-fastened to the side rails 10 as described above, there is a danger that the first cross member 14 and the brace member 30 could be rotated relative to the side rail 10 in the event of a collision. To prevent such rotation, the two brace members 30 are connected by the coupling member 32 in this example. Further, in this example, the two fastening points Pa are provided to each of the ends of the first cross member 14.

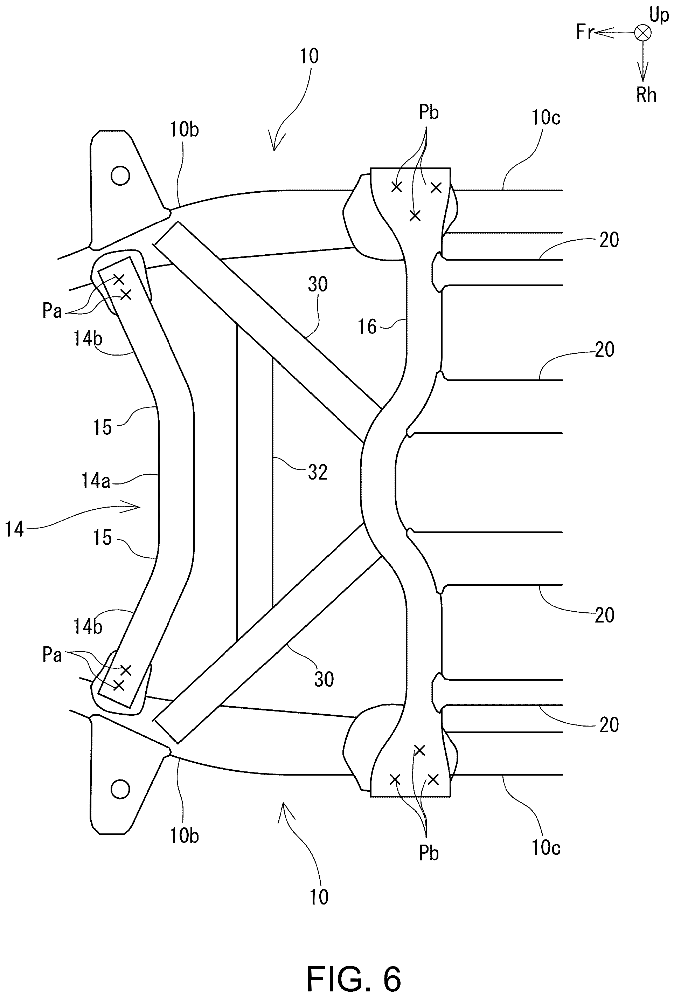

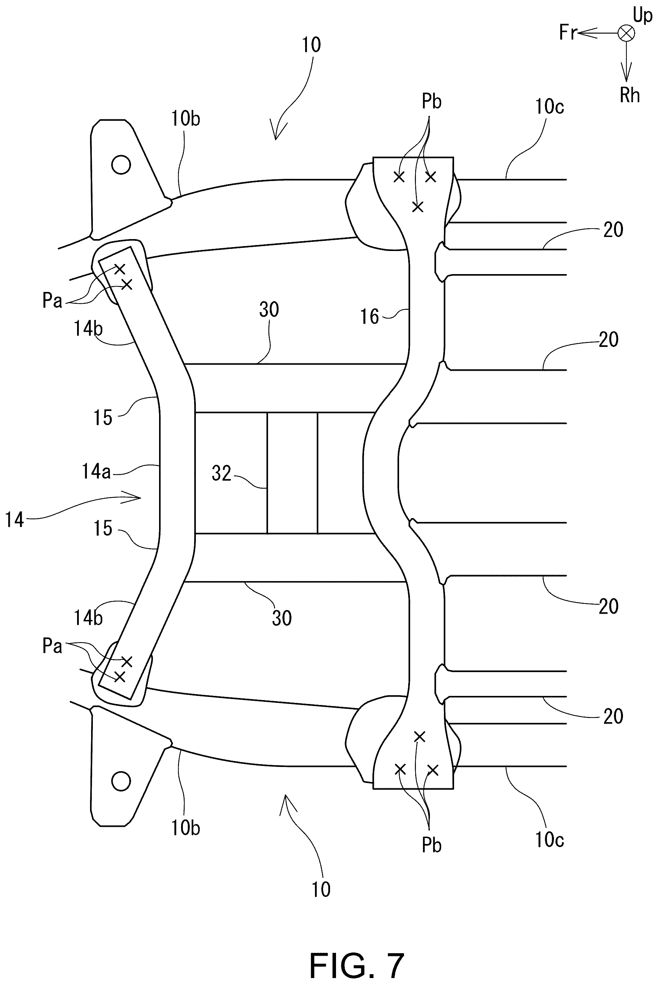

Meanwhile, in the present example, the two brace members 30 are arranged in such a manner that the separation distance between the two brace members 30 increases toward the rear of the vehicle. However, in an attempt to prevent displacement of the first cross member 14 in the vehicle width direction at the time of an offset collision, placing the two brace members 30 as shown in FIG. 6 in such a manner that the separation distance from each other decreases toward the rear of the vehicle rear may be considered. Alternatively, as shown in FIG. 7, installing the two brace members 30 substantially in parallel may be considered. However, such placement of the brace members 30 necessitates welding the rear ends of the brace members 30 to the second cross member 16, with the result that maintainability of the electrical component 26 and the storage unit 22 is impaired.

Specifically, as described above, the brace members 30 must be removed from the vehicle in order to perform maintenance of the electrical component 26. If the brace members 30 are welded to the second cross member 16, in addition to the brace members 30, both the second cross member 16 and the storage unit 22 attached to the second cross member 16 must be removed from the vehicle. As a result, the size and weight of the components which must be removed are greater than those of the components in the present example, which greatly impairs workability. To avoid such a problem, here the brace members 30 are installed with a mutual separation distance that broadens toward the rear of the vehicle, making it possible to fasten the rear ends of the brace members 30 to the side rails 10.

In the structure illustrated in FIGs. 6 and 7, the rear ends of the brace members 30 are located within a range of the storage units 22 in the vehicle width direction. In this case, a load transmitted to the brace members 30 is also transmitted to the storage units 22, which may cause a malfunction or a breakage of the storage unit 22. On the other hand, in this example, the rear ends of the brace members 30 are fastened to the side rails at positions located outside the storage units 22 in the vehicle width direction. Therefore, the load transmitted to the brace members 30 is not transmitted to the storage units 22, which can effectively prevent malfunction or breakage of the storage unit 22.

When the brace members 30 are fastened to the side rails 10 independently of the second cross member 16, maintainability of the storage unit 22 is improved along with that of the electrical component 26. Specifically, to perform maintenance of the storage unit 22, the second cross member 16 must be removed from the vehicle together with the storage unit 22. In this example, however, the brace members 30 are fastened to the side rails 10, rather than to the second cross member 16. Further, as the second cross member 16 is bolt-fastened to the side rails 10, the second cross member 16 and the storage unit 22 can be removed from the vehicle independently of the brace members 30 and the electrical component 26 attached to the vehicle, which can improve maintainability of the storage unit 22. It should be noted that if there is no requirement to maintain the storage unit 22, the brace members 30 may be fastened to the second cross member 16 instead of the side rails 10.

Referring again to FIG. 2, the first cross member 14 has the two bends 15 which are bent to protrude toward the vehicle rear region. In this example, the front ends of the brace members 30 are respectively welded to the bends 15. The reason for such an arrangement will be described below.

In terms of more effective reception of a load at the brace member 30 having a limited size of cross section, i.e., without increasing the size of cross section in a case where the load is input to the first cross member 14 along the vehicle width direction, it is advantageous that an angle of inclination of the brace member 30 relative to the vehicle width direction be smaller. Therefore, as a position of the front end of the brace member 30 becomes closer to the center of the first cross member 14, the brace member 30 is able to receive the load more effectively.

However, when the brace member 30 is not welded to the bend 15 of the first cross member 14, the likelihood of breakage of the first cross member 14 at the bend 15 before transmitting the load to the brace member 30 increases. If the first cross member 14 breaks at the bend 15, the load cannot be appropriately transmitted from the first cross member 14 to the brace member 30, which causes the forward kick portion 10b to deeply enter the mounting area Ae. Accordingly, in this example, the front end of the brace member 30 is welded to the bend 15 of the first cross member 14 to prevent breakage of the first cross member 14 at the bend 15. In this way, it can be ensured that the load is reliably transmitted from the first cross member 14 to the brace member 30, which can, in turn, more reliably prevent interference of the side rail 10 with the electrical component 26.

As can be clearly understood from the above explanation, even when an offset collision occurs, the technique disclosed in this example can suppress the displacement of the side rail 10 and thus prevent interference of the side rail 10 with the electrical component 26. It should be noted that the above-described structure is merely an example, and features or components other than those defined in Claim 1 may be modified or changed as appropriate. For example, while in the above explanation some of the brackets, such as the brackets 34a and 34b, are welded to both the brace member 30 and the coupling member 32 so as to bridge therebetween, the brackets 34a and 34b may be omitted entirely. Further, while in the above explanation, only one coupling member 32 is installed, a plurality of coupling members 32 may be installed. Still further, the shapes or positions of the side rail 10, the first cross member 14, the second cross member 16, the brace member 30, and the coupling member may be modified or changed as appropriate.

### REFERENCE SIGNS LIST

10 side rail; 10a front rail portion; 10b forward kick portion; 10c center rail portion; 14 first cross member; 14a central portion; 14b inclined portion; 15 bend; 16 second cross member; 18 third cross member; 20 sub member; 22 storage unit; 24 hydrogen tank; 26 electrical component; 30 brace member; 32 coupling member; 34 bracket; Ae mounting area; Pa, Pb, Pc bolt fastening point.

## Claims

1. A vehicle frame structure, comprising:
a pair of side rails (10) extending along a vehicle longitudinal direction;
a first cross member (14) extending along a vehicle width direction and configured to couple between the pair of side rails (10);
a second cross member (16) placed rearward of the first cross member (14) in the vehicle longitudinal direction, extending along the vehicle width direction, and configured to couple between the pair of side rails (10);
a pair of brace members (30) configured to connect the first cross member (14) to the side rails (10) or to the second cross member (16), and placed in such a manner that a separation distance between the brace members (30) is increased toward a vehicle rear region; and
a coupling member (32) extending along the vehicle width direction, and configured to couple between the pair of brace members (30).

2. The vehicle frame structure according to claim 1, wherein an electrical component (26) is mounted on upper surfaces of the pair of brace members (30) and an upper surface of the coupling member (32).

3. The vehicle frame structure according to claim 2, further comprising one or more brackets (34) for mounting the electrical component (26), wherein
at least one of the one or more brackets (34) is welded to one of the pair of brace member (30) and to the coupling member (32).

4. The vehicle frame structure according to claim 1, wherein:
the first cross member (14) is bolt-fastened to the side rails (10); and
each of the brace members (30) is bolt-fastened to a corresponding one of the side rails (10).

5. The vehicle frame structure according to claim 4, wherein:
each of left and right ends of the first cross member (14) includes at least two fastening points; and
the at least two fastening points are spaced from each other in a longitudinal direction of the first cross member (14).

6. The vehicle frame structure according to claim 1, wherein:
a storage unit (22) for storing energy is mounted at a position rearward of the second cross member (16); and
each of the rear ends of the pair of brace members (30) is fastened at a position located outward of the storage unit (22) in the vehicle width direction to a corresponding one of the side rails (10) or to the second cross member (16).

7. The vehicle frame structure according to claim 6, further comprising a plurality of sub members (20) extending from the second cross member (16) toward the vehicle rear region, wherein
the storage unit (22) is mounted on the plurality of sub members (20);
the second cross member (16) is bolt-fastened to the side rails (10); and
each of the pair of brace members (30) is bolt-fastened to a corresponding one of the side rails (10).

8. The vehicle frame member according to claim 1, wherein
the first cross member (14) includes a pair of bends (15) which are bent to protrude toward the vehicle rear region; and
each of the front ends of the pair of brace members (30) is welded to a corresponding one of the pair of bends (15).

9. The vehicle frame structure according to claim 1, wherein
each of the pair of side rails (10) comprises a front rail portion (10a), a center rail portion (10c), and a forward kick portion (10b) extending along an oblique direction and configured to couple between the front rail portion (10a) and the center rail portion (10c), wherein a separation distance between the center rail portions (10c) is greater than a separation distance between front rail portions (10a);
the first cross member (14) is joined to a region close to a boundary between the front rail portion (10a) and the forward kick portion (10b); and
the second cross member (16) is joined to a region close to a boundary between the forward kick portion (10b) and the center rail portion (10c).
